# EUROPÄISCHE PATENTSCHRIFT

(11) **EP 3 821 084 B1**
(45) Veröffentlichungstag und Bekanntmachung des Hinweises auf die Patenterteilung: **31.05.2023**
(21) Anmeldenummer: 19769858.2
(22) Anmeldetag: 09.07.2019
(51) Int. Cl.: E02D 27/42, F03D 13/20

(54) **FUNDAMENT FÜR EIN WINDKRAFTWERK**
FOUNDATION FOR A WIND MOTOR
FONDATION D'UNE ÉOLIENNE

(30) Priorität: 13.07.2018 AT 2082018
(43) Veröffentlichungstag der Anmeldung: 19.05.2021
(73) Patentinhaber: Holcim Technology Ltd, 6300 Zug (CH)
(72) Erfinder: STECHER, Arne, 5113 Holderbank (CH); SCHULDT, Christian, 5113 Holderbank (CH)
(74) Vertreter: Keschmann, Marc
(86) Internationale Anmeldenummer: PCT/IB2019/055823
(87) Internationale Veröffentlichungsnummer: WO 2020/012346

(56) Entgegenhaltungen:
- EP-A1- 3 153 627
- WO-A1-2015/048147
- WO-A2-2014/060650
- GB-A- 2 536 228

## Beschreibung

Die Erfindung betrifft ein Fundament für ein Windkraftwerk mit einem in mehrere Ringabschnitte unterteilten, aus vorgefertigten Betonelementen zusammengesetzten Basisring und sich vom Basisring radial nach außen erstreckenden Stützelementen, wobei der Basisring durch primäre Verstrebungsrippen an den Stützelementen abgestützt ist und auf den Basisring ein in mehrere Ringabschnitte unterteilter, aus vorgefertigten Betonelementen zusammengesetzter Aufbauring aufgesetzt und mit dem Basisring verbunden ist. Ein solches Fundament ist aus der Druckschrift EP 3 153 627 A1 bekannt.

Ferner betrifft die Erfindung eine Windturbine mit einem einen Rotor umfassenden Windturbinenturm, wobei der Windturbinenturm auf einem Fundament montiert ist. Weiters betrifft die Erfindung ein modulares System zur Herstellung eines Fundaments für ein Windkraftwerk.

In der WO 2004/101898 A2 ist ein Fundament für ein Windkraftwerk offenbart. Wie dort beschrieben ist, ist für die Herstellung des Fundaments von Onshore-Windkraftanlagen ein hoher manueller und administrativer Aufwand erforderlich, und die Herstellung ist sehr zeitaufwendig. Angesichts der zunehmenden Abmessungen moderner Windturbinen ist das Fundament sehr hohen Lasten ausgesetzt und muss entsprechend dimensioniert werden. Heutige Windturbinen haben einen Turm mit einer Höhe von bis zu 150 m und erzeugen bis zu 6 MW. In der Mehrzahl der Fälle besteht der Turm oder Mast von Windturbinen aus verstärktem Beton und wird unter Verwendung vorgefertigter Betonelemente gebaut. Alternativ kann der Windkraftwerksturm auch von einer Stahlkonstruktion gebildet sein.

Vor dem Aufkommen von Fundamenten aus vorgefertigten Fundamenten wurden die Fundamente für Windkraftanlagen im Wesentlichen durch Ausgraben einer Baugrube, Einbringen einer körnigen Unterstruktur, Errichten einer Fundamentkomponente, Ausführen der notwendigen Einschalungs- und Verstärkungsarbeiten und anschließendes Füllen der Baugrube mit Ortbeton hergestellt, wobei der Beton als Transportbeton durch Fahrmischer zur Arbeitsstelle transportiert und in die Baugrube gegossen wurde. Die zentrale Fundamentkomponente weist gewöhnlich eine hohlzylindrische Konfiguration auf und wurde im Allgemeinen vorgefertigt und als Einheit zur jeweiligen Montagestelle transportiert.

Die Herstellung eines Windmühlenfundaments durch Ortbeton ist mit einer Mehrzahl von Nachteilen verbunden. Sie erfordert eine komplexe Logistik für die Planung der Herstellungsaktivitäten an der Baustelle und sie ist im Hinblick auf die Errichtung der Einschalung und der Verstärkungsstruktur sowie auf das Transportieren und Gießen des Betons mit zeitaufwendigen und kostspieligen Vorgängen an der Baustelle verbunden. Dies gilt insbesondere angesichts dessen, dass mehr als 1000 m³ Beton für große Fundamente erforderlich sein können.

Um den Bauprozess eines Fundaments zu verbessern, wurde bereits in der WO 2004/101898 A2 vorgeschlagen, das Fundament unter Verwendung vorgefertigter Betonelemente zu bauen. Solche Betonelemente werden in einem Beton-Fertigteilwerk hergestellt und zur Arbeitsstelle transportiert, wo sie durch die Verwendung eines Krans in Position gebracht und dann miteinander verbunden werden. Auf diese Weise kann die Dauer der Bauvorgänge an der Arbeitsstelle erheblich verringert werden. Die vorgefertigten Betonelemente bilden, wenn sie miteinander verbunden sind, ein Fundament mit einem zentralen Standring und mehreren Stützelementen, die jeweils vom Standring radial nach außen vorstehen. Der Standring kann einen kreisringförmigen oder auch polygonalen Querschnitt aufweisen. Jedes vorgefertigte Betonelement bildet eines der Stützelemente und einen zugeordneten Ringabschnitt des Standrings. Die Ringabschnitte des Standrings werden durch verschraubte Flansche miteinander verbunden. Wie in der WO 2004/101898 A2 beschrieben ist, können die vorgefertigten Betonelemente stahlverstärkt sein. Nachdem das Fundament gebildet wurde, wird der Turm oder Mast der Windmühle auf dem Standring errichtet und mittels Ankerbolzen am Standring befestigt.

Durch die Verwendung vorgefertigter Betonelemente kann in einer kontrollierten Umgebung produziert werden, sodass die Qualität des ausgehärteten Betons verbessert werden kann. Von einem finanziellen Gesichtspunkt betrachtet, können die in einer Vorfertigungsanlage verwendeten Formen viele Male wiederverwendet werden, bevor sie ersetzt werden müssen, sodass die Kosten für die Form bzw. die Einschalung pro Einheit niedriger sind als bei einer Herstellung mit Ortbeton, die jedes Mal eine eigens errichtete Schalung erfordert. Die Schalung kann zwar mehrfach verwendet werden, muss aber von Ort zu Ort transportiert und entsprechend gereinigt werden.

Windturbinen sind Lasten und Beanspruchungen spezifischer Natur ausgesetzt, die vom Fundament aufgenommen werden müssen. Der Wind selbst wirkt in einer nicht vorhersehbaren und veränderlichen Weise. Andererseits wirken mit immer größeren Anlagen dynamische Lastkomponenten infolge von Vibrationen und Resonanzen auf die Struktur. Ferner übertragen Türme mit einer Höhe von 100 Metern und mehr infolge des auftretenden Kippmoments erhebliche exzentrische Lasten auf das Fundament. Der Beton des Fundaments muss dabei einer Kompression widerstehen, die in der komprimierten Zone auftritt, und die Verstärkungsstruktur des Betons muss die Dehnungskräfte im entgegengesetzten Teil des Fundaments aufnehmen, weil der Beton selbst eine verhältnismäßig geringe Dehnungsfestigkeit aufweist. Fundamente aus vorgefertigten verstärkten Betonelementen haben den Vorteil, dass die Leistungsfähigkeit und die Qualität des Betons, wie auch die Qualität der Herstellung insbesondere des Nachbereitungs- und Aushärteprozesses höher sind, so dass ein geringeres Risiko einer Rissbildung und eine höhere Widerstandsfähigkeit gegenüber dynamischen und statischen Lasten gegeben sind. Dies gilt insbesondere auch deshalb, weil die Aushärtung des Betons unter kontrollierbaren Bedingungen erfolgt und somit kein dahingehendes Witterungsrisiko auf der Baustelle besteht.

Generell ist es wünschenswert, den Turm bzw. Mast der Windmühle direkt auf dem Fundament zu montieren. Die Befestigung des Turms am Fundament ist jedoch nicht standardisiert, sondern muss an die spezifischen Gegebenheiten der jeweiligen Windkraftwerkskonstruktion angepasst werden. So variieren Windkraftwerke in den Abmessungen und in der Formgebung des Turms, im Material des Turms (Stahl oder Beton) und in der Art der vorgesehenen Befestigung (z.B. Ankerbolzen oder Seilverspannung). Es ist daher erforderlich, das Fundament an diese Gegebenheiten anzupassen, was im Falle von Betonfertigteilfundamenten jedoch insofern nachteilig ist, als keine standardisierte Serienfertigung solcher Fundamente möglich ist.

Ein weiterer Nachteil von aus Betonfertigteilen zusammengesetzten Fundamenten besteht darin, dass die Betonelemente vom Werk zum Aufstellungsort der Windmühle transportiert werden müssen. Aus dem generellen Bestreben, die Anzahl der Betonfertigteile, aus denen das Fundament besteht, zu minimieren, resultieren große und sperrige Betonelemente, deren Transport eine besondere Herausforderung darstellt. Um den Transport mit allgemein verfügbaren Straßentransportfahrzeugen zu ermöglichen, sind jedoch maximale Transportabmessungen einzuhalten, welche das zu transportierende Bauteil nicht überschreiten darf.

In der WO 2018/055444 A1 wurde diesbezüglich ein Fundament für ein Windkraftwerk vorgeschlagen, bei dem der Standring des Fundaments in Höhenrichtung in einen unteren Basisringabschnitt und einen oberen Adapterringabschnitt unterteilt ist, die jeweils aus vorgefertigten Betonelementen zusammengesetzt sind. Dadurch können die Betonelemente des Basisringabschnitts immer gleich ausgebildet werden, ohne dass auf herstellerspezifische Anpassungen für den Turmbereich eingegangen werden muss. Durch diese Erfindung wurde eine Serienfertigung der den Basisringabschnitt bildenden Betonelemente ermöglicht. Die baulichen Anpassungen an den Turmbereich wird beim Fundament gemäß der WO 2018/055444 A1 vom Adapterringabschnitt zur Verfügung gestellt. Der Adapterringabschnitt stellt die kraftoptimale Verbindung zwischen dem Fertigteilfundament, nämlich dem Basisringabschnitt, und dem Windkraftwerksturm her und führt somit zu einer verbesserten Standardisierung des Fertigteilfundaments.

Im Windkraftwerksgeschäft ist es eine allgemein bekannte Tatsache, dass eine auch nur geringe Erhöhung der Positionierung des Rotors eines Windkraftwerks eine nennenswerte Steigerung der Energieausbeute des betreffenden Windkraftwerks mit sich bringt. Die Investitionskosten für die höhere Positionierung des Rotors amortisieren sich über die Betriebsdauer vielfach, sodass Betreiber von Windkraftwerken immer danach trachten, möglichst hohe Masten für die Rotoren errichten zu können. Gleichzeitig sollen aber weiterhin kostengünstige Fertigteilmasten eingesetzt werden, die in bestimmten Höhenabstufungen lieferbar sind. Bei Verwendung derartiger Masten bleibt jedoch häufig die Höhe der Positionierung des Rotors unter der maximalen für ein Windkraftwerksprojekt genehmigten Höhe zurück. Die Verwendung des nächst längeren standardisierten Mastes würde jedoch zu einer Überschreitung der genehmigten Bauhöhe führen.

Der Erfindung liegt daher die Aufgabe zugrunde, ein Fundament der eingangs genannten Art dahingehend weiterzuentwickeln, dass eine geringfügige Erhöhung der Positionierung des Rotors im Wind erfolgen kann, ohne dies über eine deutlich höhere Masthöhe bewerkstelligen zu müssen.

Zur Lösung dieser Aufgabe wird ein Fundament nach Anspruch 1 bzw. ein modulares System zu dessen Herstellung entsprechend dem Anspruch 17 angegeben. Dabei wird ein Fundament der eingangs genannten Art erfindungsgemäß dahingehen weitergebildet, dass der Aufbauring durch sekundäre Verstrebungsrippen an den primären Verstrebungsrippen abgestützt ist. Dadurch, dass sich der Aufbauring mit seinen sekundären Verstrebungsrippen an den primären Verstrebungsrippen, die sich vom Basisring nach außen erstrecken, abstützt, kann der Aufbauring etwas höher gestaltet werden, ohne dass eine unzureichende Abstützung gegen Knicklasten zu befürchten ist. Die Verstrebung des Aufbaurings kann bis an das obere Ende des Aufbaurings geführt werden, sodass auch ungewöhnlich hohe Fundamente sicher abgestützt sind. Ausgehend von einer Grundebene für die Auflage des Fundaments kann daher bei entsprechend höherem Aufbauring der Mast etwas angehoben werden, sodass die gewünschte höhere Positionierung des Rotors eines Windkraftwerks erzielt wird. Die maximal zulässige Bauhöhe kann daher auch dann erreicht werden, wenn ein Fertigteilmast gegenüber der genehmigten Höhe deutlich zu kurz ist, ein längerer Fertigteilmast die genehmigte Höhe jedoch überschreiten würde. Die vorliegende Erfindung gestattet es somit, mit Fertigteilen, insbesondere vorgefertigten Betonteilen kostengünstig und flexibel Windkraftanlagen zu errichten, die hinsichtlich ihrer Höhe optimiert sind, was die Energieausbeute und somit die Rentabilität der Windkraftanlage steigert.

Die Ausbildung des Aufbaurings kann zusätzlich zu den durch den Turm bedingten baulichen Anpassungen gewünschtenfalls weitere Funktionen berücksichtigen. Beispielsweise kann der Aufbauring einen Einstieg, wie z.B. eine Türöffnung, in den Turm aufweisen. Weiters kann der Aufbauring zur Aufnahme von Netzverbindungskabeln und/oder einer Einspeisungsanlage mit vorgefertigten Befestigungspunkten versehen sein oder eine vorgefertigte Aufnahme für Elektroinstallationen aufweisen. Weiters kann der Aufbauring im Inneren des vom Aufbauring begrenzten Raums angeordnete Treppen oder bauliche Vorbereitungen für Aufzüge aufweisen.

Ein weiterer Vorteil der erfindungsgemäßen Ausbildung ergibt sich dadurch, dass die höhenmäßige Aufteilung des Fundaments in einen Basisring und einen Aufbauring zu einer Reduzierung der Bauteilhöhe der vorgefertigten Betonelemente führt, sodass die Einhaltung einer vorgegebenen maximalen Transporthöhe von z.B. 4,0 m ermöglicht wird.

Bevorzugt ist ein Ringabschnitt des Basisrings mit zumindest einem sich vom Umfangsabschnitt des Basisrings radial nach außen erstreckenden Stützelement und mit einer primären Verstrebungsrippe jeweils als vorgefertigtes Betonelement einstückig ausgebildet. Ein solches vorgefertigtes Betonelement wird gemäß dieser bevorzugten Ausführungsform der vorliegenden Erfindung durch Gießen hergestellt und aus der Gussform unmittelbar erhalten. Dies stellt eine Vereinfachung des Herstellungsverfahrens gegenüber einem Verfahren dar, bei dem mehrere Betonteile zusammengesetzt werden müssen.

Gemäß der vorliegenden Erfindung ist ein Ringabschnitt des Aufbaurings mit zumindest einer sekundären Verstärkungsrippe jeweils als vorgefertigtes Betonelement einstückig ausgebildet, was dieselben Vorteile, die soeben im Zusammenhang mit dem Basisring genannt wurden, mit sich bringt.

Die vorgefertigten Betonelemente weisen somit bevorzugt jeweils einen ringsegmentartigen inneren Ringabschnitt auf, wobei Ringabschnitte aller den Basisring und den Aufbauring ausbildenden Betonelemente in ihrer aneinander gestellten Position eine geschlossene ringförmige Struktur ausbilden, die einen inneren Hohlraum des Fundaments umschließt. Die vorgefertigten Betonelemente weisen weiters bevorzugt jeweils einen radial äußeren Abschnitt auf, welcher im Falle der den Basisring ausbildenden Elemente die Stützelemente und die primären Verstrebungsrippen und im Falle des Aufbaurings die sekundären Verstrebungsrippen ausbildet.

Die Erfindung ist bevorzugt dahingehend weitergebildet, dass ein vorgefertigtes Betonelement des Basisrings zumindest zwei sich vom Umfangsabschnitt des Basisrings radial nach außen erstreckende Stützelemente mit jeweils einer primären Verstrebungsrippe umfasst. Ein solcher einstückiger Umfangsabschnitt des erfindungsgemäßen Fundaments kann somit beispielsweise einen Viertelkreis beschreiben und die entsprechende Anzahl an Stützelementen mit primären Verstrebungsrippen aufweisen. Wenn das fertige Fundament beispielsweise acht Stützelemente aufweisen soll, weist ein einstückiger Umfangsabschnitt der Basis, der einen Viertelkreis beschreibt, zwei Stützelemente mit entsprechend zwei primären Verstrebungsrippen auf.

Analog hierzu kann die vorliegende Erfindung bevorzugt dahingehend weitergebildet sein, dass ein vorgefertigtes Betonelement des Aufbaurings zumindest zwei sekundäre Verstärkungsrippen zur Verstrebung gegen jeweils eine primäre Verstrebungsrippe des Basisrings umfasst. Ein solcher einstückiger Umfangsabschnitt des erfindungsgemäßen Fundaments kann somit beispielsweise einen Viertelkreis beschreiben und die entsprechende Anzahl an sekundären Verstrebungsrippen aufweisen. Wenn das fertige Fundament beispielsweise acht Stützelemente aufweisen soll, weist ein einstückiger Umfangsabschnitt des Aufbaus, der einen Viertelkreis beschreibt, zwei sekundäre Verstrebungsrippen auf.

Mit Vorteil ist das erfindungsgemäße Fundament dahingehend weitergebildet, dass der Basisring und der Aufbauring eine voneinander verschiedene Umfangsteilung aufweisen, das heißt, dass sich die umfangsmäßige Erstreckung der Ringabschnitte des Basisrings von der umfangsmäßigen Erstreckung der Ringabschnitte des Aufbaurings unterscheidet. Durch diese Maßnahme wird sichergestellt, dass die vertikalen Teilungsflächen der Ringabschnitte des Basisrings und des Aufbaurings unabhängig davon, ob beim Zusammensetzen des Fundaments aus den vorgefertigten Betonteilen darauf geachtet wird, zueinander versetzt sind und somit eine gewisse Grundstabilität des erfindungsgemäßen Fundaments zuverlässig gegeben ist.

Bevorzugt ist die vorliegende Erfindung dahingehend weitergebildet, dass Verbindungselemente, wie z.B. Schraubverbindungen, zur vorzugsweise lösbaren Verbindung des Basisrings und der primären Verstrebungsrippen mit dem Aufbauring und den sekundären Verstrebungsrippen vorgesehen sind. Der Aufbauring wird mit Hilfe der genannten Verbindungselemente vorzugsweise von oben her mit dem Basisring verbunden. Die Verbindungsmittel werden z.B. von Schraubbolzen gebildet, die in vorzugsweise vertikal verlaufende Schraublöcher geschraubt werden, die bevorzugt in horizontalen Flanschelementen des jeweiligen vorgefertigten Betonelements ausgebildet sind. Alternativ können die Schraubbolzen so angeordnet sein, dass sie Durchgangsbohrungen sowohl des Basisrings als auch des Aufbaurings durchsetzen und den Basisring und den Aufbauring durch Anbringen von Schraubenmuttern an den entgegengesetzten Enden zusammenspannen.

Eine weitere bevorzugte Ausbildung der Erfindung sieht vor, dass der Aufbauring eine horizontale Standfläche für einen Windkraftwerksturm sowie Verankerungsmittel zum Verankern des Windkraftwerksturms am Aufbauring umfasst, wobei die Verankerungsmittel vorzugsweise Ankerbolzen und/oder Seildurchführungen für eine Seilverspannung umfassen. Die Ankerbolzen sind in der Regel zum Befestigen eines als Stahlkonstruktion ausgebildeten Turms vorgesehen. Die Seilverspannung ist in der Regel für die Befestigung von Betontürmen vorgesehen, sowohl von Vollbeton-Türmen als auch von Hybridtürmen.

Die Verbindungselemente für die Verbindung des Basisrings und der primären Verstrebungsrippen mit dem Aufbauring und den sekundären Verstrebungsrippen sind bevorzugt radial außerhalb der Verankerungsmittel zum Verankern des Windkraftwerksturms am Aufbauring angeordnet. Alternativ können die für das Verbinden des Aufbaurings mit dem Basisring vorgesehenen Verbindungselemente, insbesondere Schraubbolzen, für die Verankerung des Windmühlenturms am Standring, der aus dem Basisring und dem Aufbauring besteht, mitverwendet werden.

Bevorzugt bestehen die vorgefertigten Betonelemente aus verstärktem Beton, der eine Verstärkungsstruktur, insbesondere Verstärkungselemente, -profile, -stangen oder -drähte, aufweist, welche in die vorgefertigten Betonelemente eingebettet sind und/oder die als Spannelemente zum Zusammenspannen der vorgefertigten Betonelemente zu Spannbetonelementen ausgebildet sind.

Im Gegensatz zu Fundamenten aus Ortbeton wird bei Fundamenten aus Betonfertigelementen ohne ergänzende Maßnahmen keine monolithische Struktur bereitgestellt, sodass technische Lösungen für das sichere Verbinden der vorgefertigten Betonelemente miteinander zur Nachahmung einer monolithischen Struktur angestrebt werden. Um zu erreichen, dass sich das erfindungsgemäße Fundament ähnlich wie ein monolithisches Fundament verhält, um hohen statischen und dynamischen Lasten zu widerstehen, sieht eine bevorzugte Ausbildung vor, dass eine Verbindungsstruktur bereitgestellt ist, welche die vorgefertigten Betonelemente zusammenhält und bevorzugt mit der Verstärkungsstruktur gekoppelt ist. Die Verbindungsstruktur kann von einer beliebigen Art sein, die dafür geeignet ist, die vorgefertigten Betonelemente starr zusammenzuhalten, um eine monolithische Struktur zu bilden. Die Verbindungsstruktur unterscheidet sich von der Verstärkungsstruktur und wird daher vorzugsweise nicht in die vorgefertigten Betonelemente eingebettet. Die Verbindungsstruktur wird bevorzugt mit der Verstärkungsstruktur gekoppelt, wodurch ein ununterbrochener Lastweg zwischen den Verstärkungsstrukturen ermöglicht wird, so dass die in das Fundament eingebrachten Kräfte wirksam verteilt werden. Im Kontext der Erfindung bedeutet das Koppeln der Verbindungsstruktur und der Verstärkungsstruktur, dass die auf die Verstärkungsstruktur einwirkenden Kräfte auf die Verbindungsstruktur übertragen werden, ohne dass Beton dazwischen angeordnet wird, und umgekehrt. Demgemäß können die Verbindungsstruktur und die Verstärkungsstruktur direkt oder über ein von Beton verschiedenes starres Verbindungselement miteinander verbunden werden. Alternativ kann das Koppeln der Verbindungsstruktur und der Verstärkungsstruktur auch unter Zwischenschaltung von Betonmaterial erfolgen.

Die Verstärkungsstruktur weist vorzugsweise Verstärkungsstangen auf, die aus Stahl oder einem ähnlichen starren Material bestehen. Vorzugsweise erstrecken sich die Verstärkungsstangen in Längsrichtung der Verstrebungsrippen. Zusätzliche Verstärkungsstangen können sich senkrecht oder schräg zu den Verstärkungsstangen erstrecken, die sich in Längsrichtung der Verstrebungsrippen erstrecken. Zusätzliche Verstärkungsstangen/-profile können auch im Basisring und im Aufbauring angeordnet werden und sich in axialer Richtung davon erstrecken. Die länglichen Verstärkungsstangen können sich vorzugsweise in radialer Richtung zum Zentrum des erfindungsgemäßen Fundaments erstrecken, wobei die länglichen Verstärkungsstangen entweder in einer horizontalen Ebene angeordnet werden oder sich schräg zur horizontalen Ebene, insbesondere zum Basisring und zum Aufbauring aufsteigend, erstrecken können. Im letztgenannten Fall werden die Verstärkungsstangen in Bezug auf die Kräfte, die vom Basisring und vom Aufbauring radial nach außen abgeleitet werden, im Wesentlichen mit dem Lastweg ausgerichtet.

Die Verbindungsstruktur weist vorzugsweise mehrere starre längliche Verbindungselemente, insbesondere Stahlprofile oder - stangen auf, die jeweils die vorgefertigten Betonelemente eines Paars entgegengesetzt angeordneter vorgefertigter Betonelemente derart miteinander verbinden, dass ein Hohlraum durchquert wird, der vom Basisring und vom Aufbauring eingekreist ist. Die länglichen Verbindungselemente der Verbindungsstruktur werden mit der Verstärkungsstruktur, insbesondere mit den Verstärkungsstangen, vorzugsweise mit den Verstärkungsstangen, die sich in Längsrichtung der Verstrebungsrippen erstrecken, gekoppelt. Auf diese Weise werden die in entgegengesetzt angeordnete vorgefertigte Betonelemente eingebetteten Verstärkungsstangen durch die länglichen Verbindungselemente der Verbindungsstruktur miteinander verbunden, wobei ein Lastübertragungsweg zwischen der Verstärkungsstruktur der entgegengesetzt angeordneten vorgefertigten Betonelemente gebildet wird. Dies führt dazu, dass die Dehnungslast, die infolge eines Biegemoments des Turms auf das Fundament ausgeübt wird, nicht nur von der Verstärkungsstruktur aufgenommen wird, die auf einer Seite des Fundaments angeordnet ist, sondern auch auf die Verstärkungsstruktur übertragen wird, die auf der entgegengesetzten Seite des Fundaments angeordnet ist.

Gemäß einer bevorzugten Ausführungsform der Erfindung ist jedes Paar entgegengesetzt angeordneter vorgefertigter Betonelemente mit einem der starren länglichen Verbindungselemente verbunden. Auf diese Weise durchqueren mehrere längliche Verbindungselemente, insbesondere Stahlstangen oder -profile, den vom Basisring und vom Aufbauring eingekreisten Hohlraum. Weil diese durchquerenden länglichen Verbindungselemente alle diametral angeordnet sind, treffen sie sich im Zentrum des aus Basisring und Aufbauring bestehenden Standrings des erfindungsgemäßen Fundaments, so dass eine symmetrische Anordnung erreicht wird, welche für eine optimale Verteilung der Kräfte innerhalb des gesamten Fundaments sorgt.

Die länglichen Verstärkungselemente können den Basisring bzw. den Aufbauring in einer horizontalen Ebene durchqueren. Vorzugsweise ist jedoch vorgesehen, dass ein Paar von entgegengesetzt angeordneten vorgefertigten Betonelementen jeweils einen Ringabschnitt des Basisrings mit zumindest einem sich vom Ringabschnitt des Basisrings radial nach außen erstreckenden Stützelement und einer primären Verstrebungsrippe sowie einen Ringabschnitt des Aufbaurings mit zumindest einer sekundären Verstrebungsrippe umfasst.

In diesem Zusammenhang ist es vorteilhaft, wenn die starren länglichen Verbindungselemente an ihrem Schnitt, der auf der Mittelachse des Basisrings und des Aufbaurings angeordnet ist, miteinander verbunden werden. Auf diese Weise wird ein Mittelpunkt in der Symmetrieachse des Fundaments bereitgestellt, der eine Lastverteilung in verschiedenen Richtungen ermöglicht.

In Bezug auf die Kopplung zwischen der Verstärkungsstruktur und der Verbindungsstruktur sieht eine bevorzugte Ausführungsform vor, dass die starren länglichen Verbindungselemente der Verbindungsstruktur, und die Verstärkungsstruktur, insbesondere die Verstärkungsstangen, durch eine Ummantelung, die an einer Innenfläche des Basisrings und des Aufbaurings angeordnet ist, miteinander verbunden sind. Die Ummantelung kann aus einem Stahlblechgehäuse bestehen, das an der Innenfläche des Basisrings und des Aufbaurings befestigt ist. Im Fall eines Basisrings und Aufbaurings in Form von Hohlzylindern kann die Ummantelung als eine zylindrische Ummantelung ausgebildet sein, die an der inneren zylindrischen Fläche des Basisrings und des Aufbaurings angeordnet ist. Die Ummantelung dient dazu, den Lastweg von der Verstärkungsstruktur zur Verbindungsstruktur zu richten und umgekehrt. Dies wird durch starres Verbinden sowohl der Verstärkungsstangen/-profile der Verstärkungsstruktur als auch der Verstärkungselemente der Verbindungsstruktur mit der Ummantelung erreicht.

In diesem Zusammenhang sieht eine bevorzugte Ausführungsform vor, dass die Verstärkungselemente der Verstärkungsstruktur durch Schweißen und/oder Schraubverbindungen an der Ummantelung befestigt sind. Dies kann vorteilhafterweise erreicht werden, indem die Verstärkungsstangen der Verstärkungsstruktur so angeordnet werden, dass sie von den vorgefertigten Betonelementen nach innen vorstehen und vorzugsweise in Öffnungen eindringen, die in der Ummantelung bereitgestellt sind. Das Schweißen kann in diesem Fall an der Innenseite der Ummantelung erfolgen. Alternativ kann das Schweißen an der Außenseite der Ummantelung erfolgen.

Ferner kann die Verbindungsstruktur durch Schweißen oder eine Schraubverbindung an der Ummantelung befestigt werden.

Alternativ kann die Verbindungsstruktur durch Schweißen oder eine Schraubverbindung an Anschlussstücke befestigt sein, die in die vorgefertigten Betonelemente integriert, insbesondere eingegossen sind und an die Verstärkungsstruktur angekoppelt sind.

Der Hohlraum innerhalb des Basisrings und des Aufbaurings kann für verschiedene Zwecke verwendet werden, beispielsweise als Speicherplatz oder zum Vornehmen von Wartungsarbeiten, und er kann daher mit Treppen, Plattformen und dergleichen versehen werden. Ferner kann der Hohlraum auch für die Installation von Nachspannkabeln, den Zugriff auf sie und ihre Wartung verwendet werden, wobei die Nachspannkabel angeordnet werden, um den Turm des Windkraftwerks zu stabilisieren.

Die Stützelemente der vorgefertigten Betonelemente können eine rechteckige Form aufweisen. Alternativ können sich die Stützelemente in horizontaler Richtung mit zunehmendem Abstand vom Zentrum des Fundaments verbreitern.

Um den Hohlraum innerhalb des aus Basisring und Aufbauring bestehenden Standrings an seinem Boden zu schließen, sieht eine bevorzugte Ausführungsform der vorliegenden Erfindung vor, dass die Stützelemente einen Randabschnitt aufweisen, der nach innen in den vom Standring eingekreisten Hohlraum vorsteht. Insbesondere bilden die Randabschnitte aller vorgefertigten Betonelemente gemeinsam einen umfänglichen, insbesondere kreisförmigen Rand, der eine zentrale Bodenplatte, die am Boden des Standrings bzw. des Basisrings angeordnet ist, umfänglich stützt.

Gemäß einer weiteren bevorzugten Ausführungsform der Erfindung werden die vorgefertigten Betonelemente durch wenigstens ein Nachspannkabel, das in einem umfänglichen, insbesondere kreisförmigen Durchgang angeordnet ist, der im Basisring und im Aufbauring ausgebildet ist, aneinander festgezogen. Solche Kabel haben die Funktion einer Verbindungsstruktur, die jedoch nicht, wie weiter oben beschrieben mit der in die vorgefertigten Betonelemente eingebetteten Verstärkungsstruktur gekoppelt ist.

Wenn die vorgefertigten Betonelemente aneinander festgezogen werden, werden die Seitenflächen benachbarter Umfangsabschnitte des Basisrings und des Aufbaurings gegeneinander gedrückt. Zum genauen Ausrichten der benachbarten Umfangsabschnitte miteinander können die Seitenflächen Formpasselemente in der Art einer Zungen- und Rillenanordnung aufweisen, die miteinander zusammenwirken, um die relative Position der Segmente zu gewährleisten.

Die Installation der vorgefertigten Betonelemente an der Arbeitsstelle wird erheblich vereinfacht, wenn gemäß einer bevorzugten Ausführungsform benachbarte vorgefertigte Betonelemente in ihren Abschnitten, die vom Aufbauring nach außen vorstehen, in Umfangsrichtung voneinander beabstandet sind. Insbesondere haben die Stützelemente eine solche Breitenabmessung, dass die Stützelemente benachbarter vorgefertigter Betonelemente einander nicht berühren. Auf diese Weise können die Herstellungstoleranzen bei der Herstellung der vorgefertigten Betonelemente erreicht werden.

Der für die Herstellung der vorgefertigten Betonelemente verwendete Beton kann von einem beliebigen Typ sein, der typischerweise auch für das Gießen von Beton an der Verwendungsstelle verwendet wird. Zusätzlich zu Zuschlagstoffen und Wasser enthält Beton Zement als hydraulisches Bindemittel.

Es kann auch faserverstärkter Beton verwendet werden, um die vorgefertigten Betonelemente herzustellen. Die Fasern können aus einem beliebigen Fasermaterial bestehen, das zur Erhöhung der strukturellen Integrität, insbesondere der Stärke, der Stoßfestigkeit und/oder der Haltbarkeit, der sich ergebenden Betonstruktur beiträgt. Faserverstärkter Beton enthält kurze diskrete Verstärkungsfasern, die gleichmäßig verteilt und zufällig orientiert sind.

Vorzugsweise sind die Verstärkungsfasern Kohlefasern, synthetische Fasern und insbesondere Polypropylenfasern. Alternativ können die Verstärkungsfasern Stahlfasern, Glasfasern oder Naturfasern sein. Weiters ist auch die Verwendung von HPC (High Performance Concrete) und UHPC (Ultra High Performance Concrete) möglich. Diese Betonarten sind hochfeine Bindemittel mit speziellen, hochfeinen Zuschlagstoffen und entsprechenden Additiven und sind aufgrund ihres relativ geringen Gewichts als vorteilhaft anzusehen.

Die erfindungsgemäße Windturbine mit einem einen Rotor umfassenden Windturbinenturm, ist auf einem wie oben beschriebenen Fundament montiert und kann daher eine optimierte Bauhöhe aufweisen, auch wenn aus Kostengründen Betonfertigteile zum Einsatz gelangen sollen. Das Fundament ist verglichen mit Fundamenten aus dem Stand der Technik höher und dennoch ordnungsgemäß abgestützt.

Das erfindungsgemäße modulare System zur Herstellung eines wie oben beschriebenen Fundaments für ein Windkraftwerk weist einen in mehrere Ringabschnitte unterteilten, aus vorgefertigten Betonelementen zusammengesetzten Basisring und sich vom Basisring radial nach außen erstreckende Stützelemente auf, wobei der Basisring durch primäre Verstrebungsrippen an den Stützelementen abgestützt ist. Auf den Basisring kann ein in mehrere Ringabschnitte unterteilter, aus vorgefertigten Betonelementen zusammengesetzter Aufbauring aufgesetzt und mit dem Basisring verbunden werden, wobei der Aufbauring durch sekundäre Verstrebungsrippen an den primären Verstrebungsrippen des Basisringes abstützbar ist und wobei das System zumindest zwei unterschiedliche Ausführungen eines Aufbaurings umfasst, der auf den Basisring aufsetzbar ist. Das modulare System erlaubt mit seinen zumindest zwei unterschiedlichen Ausführungen des Aufbaurings, dass der Aufbauring an die Gegebenheiten der Montagesituation jedes einzelnen Windkraftwerks einer Windparkanlage angepasst werden kann, um bei Verwendung von Betonfertigteilen ein optimales Ergebnis zu erzielen.

Bevorzugt unterscheiden sich die zumindest zwei unterschiedlichen Ausführungen des Aufbaurings voneinander in ihrer Höhe, um bei Maximierung der Bauhöhe des Windkraftwerks bezüglich der zugelassenen bzw. genehmigten Höhe die Energieausbeute und damit die Rentabilität des Windkraftwerks zu maximieren.

Alternativ oder zusätzlich unterscheiden sich die wenigstens zwei unterschiedlichen Ausführungen des Aufbaurings in den Verankerungsmitteln zum Verankern des Windkraftwerksturms am Aufbauring, insbesondere in der Art, der Anzahl oder der Geometrie der Verankerungsmittel. In diesem Zusammenhang ist es beispielsweise denkbar, dass eine erste Ausführung des Aufbaurings Verankerungsbolzen zur Verankerung des Windkraftwerksturms und eine zweite Ausführung des Aufbaurings Seildurchführungen für Spannseile zum Verspannen des Windkraftwerksturms umfasst, wie dies einer bevorzugten Ausführungsform der vorliegenden Erfindung entspricht. Die Ankerbolzen sind in der Regel zum Befestigen eines als Stahlkonstruktion ausgebildeten Turms vorgesehen. Die Seildurchführungen sind in der Regel für die Befestigung von Betontürmen vorgesehen.

Die Erfindung wird nachfolgend anhand eines in der Zeichnung dargestellten Ausführungsbeispiels näher erläutert. In dieser zeigen
Fig. 1 eine perspektivische Darstellung des erfindungsgemäßen Fundaments,
Fig. 2 eine perspektivische Darstellung eines Umfangsabschnittes des erfindungsgemäßen Fundaments und
Fig. 3 eine seitliche Schnittdarstellung des erfindungsgemäßen Fundaments

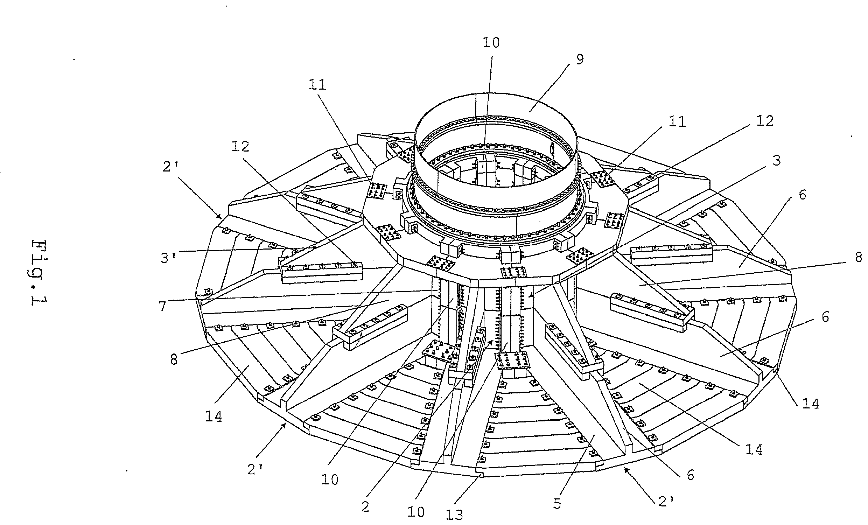

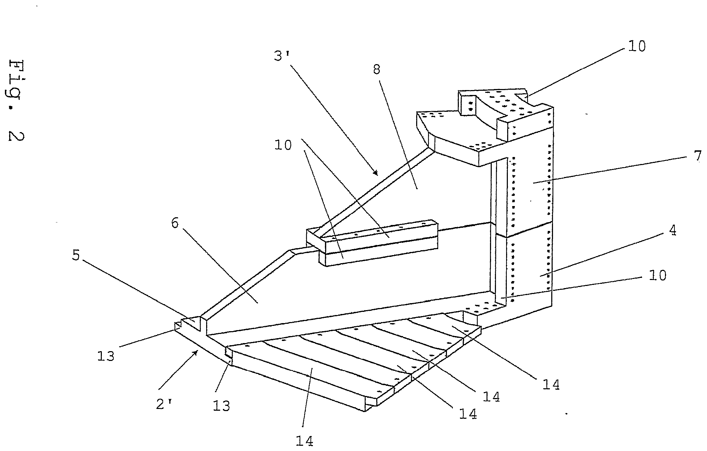

In Fig. 1 ist das erfindungsgemäße Fundament allgemein mit dem Bezugszeichen 1 bezeichnet. Das Fundament 1 besteht im Wesentlichen aus einem Basisring 2 und einem Aufbauring 3, wobei sowohl der Basisring 2 als auch der Aufbauring 3 in eine Mehrzahl von Ringabschnitten 4 und 7 unterteilt und aus diesen zusammengesetzt sind. Ein Umfangsabschnitt 2' der Basis weist einen kreissegmentförmigen Ringabschnitt 4 und ein Stützelement 5 auf. Der Basisring 2 ist als Ganzes durch primäre Verstrebungsrippen 6 an den Stützelementen 5 abgestützt. Ein Umfangsabschnitt 3' des Aufbaurings 3 weist einen kreissegmentförmigen Ringabschnitt 7 sowie sekundäre Verstrebungsrippen 8 (Fig. 2) auf, die an den primären Verstrebungsrippen 6 am Basisring 2 abgestützt sind. Der Aufbauring 3 ist somit als Ganzes durch die sekundären Verstrebungsrippen 8 an den primären Verstrebungsrippen 6 des Basisringes 2 abgestützt und kann daher mit einer relativ großen Höhenerstreckung ausgeführt werden, um den Mastadapter 9 eines Windkraftwerks, etwas anzuheben. Die Verbindung der als vorgefertigte, einteilige Betonteile hergestellten Umfangsabschnitte 2' und 3' des Basisrings 2 und des Aufbaurings 3 erfolgt mittels Flanschen 10 und Schraubplatten 11, die mit Schraubbolzen 12 verschraubt werden. Zwischen den Stützelementen 5 des Basisrings sind an entsprechenden Vorsprüngen 13 Bodenplatten 14 eingelegt und ebenfalls verschraubt.

In Fig. 2 ist nun noch deutlicher zu erkennen, dass ein Umfangsabschnitt 2' der Basis im Wesentlichen aus einem Stützelement 5 und einem Ringabschnitt 4 besteht, wobei der Ringabschnitt 4 durch eine primäre Verstrebungsrippe 6 am Stützelement 5 abgestützt ist. Der Ringabschnitt 7 des Umfangsabschnitts 3' des Aufbauringes 3 ist erfindungsgemäß durch die sekundäre Verstrebungsrippe 8 an der primären Verstrebungsrippe 6 abgestützt. Mit dem Bezugszeichen 10 sind wiederum die Flansche zur Aufnahme der in Fig. 2 nicht dargestellten Schraubbolzen bezeichnet. In den Ringabschnitten 4 und 7 sind in den Flanschen 10 eine Vielzahl von Bohrungen ausgeführt, die der Verschraubung der jeweiligen Ringabschnitte 4 und 7 miteinander dienen.

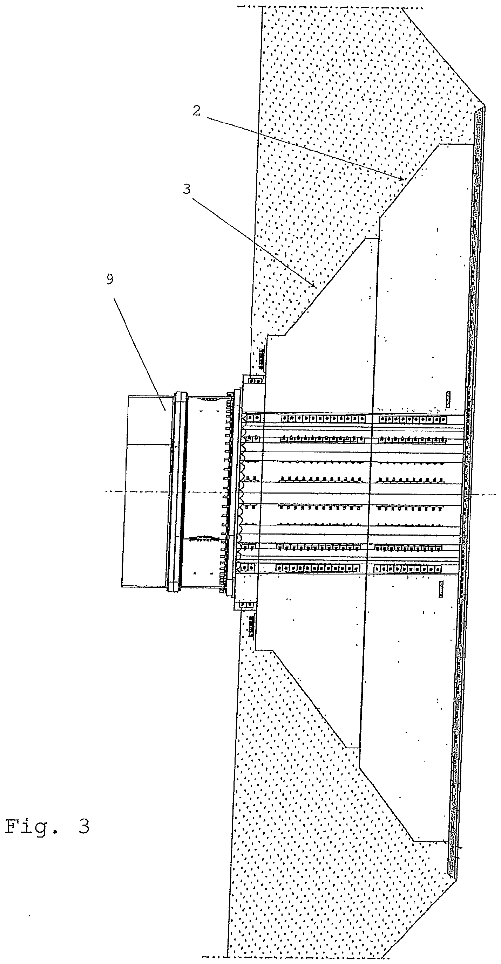

In Fig. 3 ist zu erkennen, dass der Aufbauring 3 eine Höhe aufweisen kann, die die Höhe des Basisrings 2 übertrifft. Damit kann der Mastadapter 9 entsprechend angehoben werden, um die gewünschte Höhe der Positionierung eines Rotors erzielen zu können.

## Patentansprüche

1. Fundament (1) für ein Windkraftwerk mit einem in mehrere Ringabschnitte (4) unterteilten, aus vorgefertigten Betonelementen zusammengesetzten Basisring (2) und sich vom Basisring (2) radial nach außen erstreckenden Stützelementen (5), wobei der Basisring (2) durch primäre Verstrebungsrippen (6) an den Stützelementen (5) abgestützt ist und auf den Basisring (2) ein in mehrere Ringabschnitte (7) unterteilter, aus vorgefertigten Betonelementen zusammengesetzter Aufbauring (3) aufgesetzt und mit dem Basisring (2) verbunden ist, **dadurch gekennzeichnet, dass** der Aufbauring (3) durch sekundäre Verstrebungsrippen (8) an den primären Verstrebungsrippen (6) abgestützt ist, wobei ein Ringabschnitt (7) des Aufbaurings (3) mit zumindest einer sekundären Verstrebungsrippe (8) jeweils als vorgefertigtes Betonelement einstückig ausgebildet ist.

2. Fundament nach Anspruch 1, **dadurch gekennzeichnet, dass** ein Ringabschnitt (4) des Basisrings (2) mit zumindest einem sich vom Ringabschnitt (4) des Basisrings (2) radial nach außen erstreckenden Stützelement (5) und mit einer primären Verstrebungsrippe (6) jeweils als vorgefertigtes Betonelement einstückig ausgebildet ist.

3. Fundament nach einem der Ansprüche 1 oder 2, **dadurch gekennzeichnet, dass** ein vorgefertigtes Betonelement des Basisrings (2) zumindest zwei sich vom Ringabschnitt (4) des Basisrings (2) radial nach außen erstreckende Stützelemente (5) mit jeweils einer primären Verstrebungsrippe (6) umfasst.

4. Fundament nach einem der Ansprüche 1, 2 oder 3, **dadurch gekennzeichnet, dass** ein vorgefertigtes Betonelement des Aufbaurings (3) zumindest zwei sekundäre Verstärkungsrippen (8) zur Verstrebung gegen jeweils eine primäre Verstrebungsrippe (6) umfasst.

5. Fundament nach einem der Ansprüche 1 bis 4, **dadurch gekennzeichnet, dass** der Basisring (2) und der Aufbauring (3) eine voneinander verschiedene Umfangsteilung aufweisen.

6. Fundament nach einem der Ansprüche 1 bis 5, **dadurch gekennzeichnet, dass** Verbindungselemente, wie z.B. Schraubverbindungen (12), zur vorzugsweise lösbaren Verbindung des Basisrings (2) und der primären Verstrebungsrippen (6) mit dem Aufbauring (3) und den sekundären Verstrebungsrippen (8) vorgesehen sind.

7. Fundament nach einem der Ansprüche 1 bis 6, **dadurch gekennzeichnet, dass** der Aufbauring (3) eine horizontale Standfläche für einen Windkraftwerksturm sowie Verankerungsmittel zum Verankern des Windkraftwerksturms am Aufbauring umfasst, wobei die Verankerungsmittel vorzugsweise Ankerbolzen und/oder Seildurchführungen für eine Seilverspannung umfassen.

8. Fundament nach einem der Ansprüche 6 oder 7, **dadurch gekennzeichnet, dass** die Verbindungselemente für die Verbindung des Basisrings (2) und der primären Verstrebungsrippen (6) mit dem Aufbauring (3) und den sekundären Verstrebungsrippen (8) radial außerhalb der Verankerungsmittel zum Verankern des Windkraftwerksturms am Aufbauring (3) angeordnet sind.

9. Fundament nach einem der Ansprüche 1 bis 8, **dadurch gekennzeichnet, dass** die vorgefertigten Betonelemente aus verstärktem Beton bestehen, der eine Verstärkungsstruktur, insbesondere Verstärkungselemente, -profile, -stangen oder - drähte, aufweist, welche in die vorgefertigten Betonelemente eingebettet sind und/oder die als Spannelemente zum Zusammenspannen der vorgefertigten Betonelemente zu Spannbetonelementen ausgebildet sind.

10. Fundament nach einem der Ansprüche 1 bis 9, **dadurch gekennzeichnet, dass** eine Verbindungsstruktur bereitgestellt ist, welche die vorgefertigten Betonelemente zusammenhält und bevorzugt mit der Verstärkungsstruktur gekoppelt ist.

11. Fundament nach Anspruch 10, **dadurch gekennzeichnet, dass** die Verbindungsstruktur mehrere starre längliche Verbindungselemente, insbesondere Stahlprofile oder -stangen aufweist, die jeweils die vorgefertigten Betonelemente eines Paars entgegengesetzt angeordneter vorgefertigter Betonelemente derart miteinander verbinden, dass ein Hohlraum durchquert wird, der vom Basisring und vom Aufbauring eingekreist ist.

12. Fundament nach Anspruch 11, **dadurch gekennzeichnet, dass** jedes Paar entgegengesetzt angeordneter vorgefertigter Betonelemente mit einem der starren länglichen Verbindungselemente verbunden ist.

13. Fundament nach einem der Ansprüche 11 oder 12, **dadurch gekennzeichnet, dass** ein Paar von entgegengesetzt angeordneten vorgefertigten Betonelementen jeweils einen Ringabschnitt (4) des Basisrings (2) mit zumindest einem sich vom Ringabschnitt (4) des Basisrings (2) radial nach außen erstreckenden Stützelement (5) und einer primären Verstrebungsrippe (6) sowie einen Ringabschnitt (7) des Aufbaurings (3) mit zumindest einer sekundären Verstrebungsrippe (8) umfasst.

14. Fundament nach einem der Ansprüche 11, 12 oder 13, **dadurch gekennzeichnet, dass** die starren länglichen Verbindungselemente der Verbindungsstruktur, und die Verstärkungsstruktur, insbesondere die Verstärkungsstangen, durch eine Ummantelung, die an einer Innenfläche des Basisrings (2) und des Aufbaurings (3) angeordnet ist, miteinander verbunden sind.

15. Fundament nach einem der Ansprüche 11 bis 14, **dadurch gekennzeichnet, dass** die Verstärkungselemente der Verstärkungsstruktur durch Schweißen und/oder Schraubverbindungen an der Ummantelung befestigt sind.

16. Windturbine mit einem einen Rotor umfassenden Windturbinenturm, wobei der Windturbinenturm auf einem Fundament nach einem der Ansprüche 1 bis 15 montiert ist.

17. Modulares System zur Herstellung eines Fundaments für ein Windkraftwerk gemäß einem der Ansprüche 1 bis 16, umfassend
- einen in mehrere Ringabschnitte (4) unterteilten, aus vorgefertigten Betonelementen zusammengesetzten Basisring (2),
- sich vom Basisring (2) radial nach außen erstreckende Stützelemente (5),
- wobei der Basisring (2) durch primäre Verstrebungsrippen (6) an den Stützelementen (5) abgestützt ist und
- einen in mehrere Ringabschnitte (7) unterteilten, aus vorgefertigten Betonelementen zusammengesetzten Aufbauring (3), der auf den Basisring (2) aufgesetzt und mit dem Basisring (2) verbunden ist,
- wobei der Aufbauring (3) durch sekundäre Verstrebungsrippen (8) an den primären Verstrebungsrippen (6) des Basisringes (2) abgestützt ist,
- wobei ein Ringabschnitt (7) des Aufbaurings (3) mit zumindest einer sekundären Verstrebungsrippe (8) jeweils als vorgefertigtes Betonelement einstückig ausgebildet ist,
**dadurch gekennzeichnet, dass** das System zumindest zwei unterschiedliche Ausführungen des Aufbaurings (3) umfasst, die wahlweise auf den Basisring (2) aufgesetzt sind.

18. Modulares System nach Anspruch 17, **dadurch gekennzeichnet, dass** sich die zumindest zwei unterschiedlichen Ausführungen des Aufbaurings (3) voneinander in ihrer Höhe unterscheiden.

19. Modulares System nach einem der Ansprüche 17 oder 18, **dadurch gekennzeichnet, dass** sich die wenigstens zwei unterschiedlichen Ausführungen des Aufbaurings (3) in den Verankerungsmitteln zum Verankern des Windkraftwerksturms am Aufbauring, insbesondere in der Art, der Anzahl oder der Geometrie der Verankerungsmittel unterscheiden.

20. Modulares System nach einem der Ansprüche 17, 18 oder 19, **dadurch gekennzeichnet, dass** eine erste Ausführung des Aufbaurings Verankerungsbolzen zur Verankerung des Windmühlenturms und eine zweite Ausführung des Aufbaurings Seildurchführungen für Spannseile zum Verspannen des Windmühlenturms umfasst.

## Claims

1. Foundation (1) for a windmill with a base ring (2) composed of prefabricated concrete elements and divided into several ring sections (4) and support elements (5) extending radially outward from the base ring (2), wherein the base ring (2) is supported on the support elements (5) by primary strut ribs (6) and wherein a mounting ring (3), which is divided into several ring sections (7) and composed of prefabricated concrete elements, is placed on the base ring (2) and connected to the base ring (2), **characterized in that** the mounting ring (3) is supported by secondary strut ribs (8) on the primary strut ribs (6), wherein a ring section (7) of the mounting ring (3) with at least one secondary strut rib (8) is formed in one piece as a prefabricated concrete element.

2. Foundation according to claim 1, **characterized in that** a ring section (4) of the base ring (2) is formed with at least one support element (5) extending radially outward from the ring section (4) of the base ring (2) and with a primary strut rib (6) in one piece as a prefabricated concrete element.

3. Foundation according to one of claims 1 or 2, **characterized in that** a prefabricated concrete element of the base ring (2) comprises at least two support elements (5) extending radially outwardly from the ring section (4) of the base ring (2), each with a primary strut rib (6).

4. Foundation according to one of claims 1, 2 or 3, **characterized in that** a prefabricated concrete element of the mounting ring (3) comprises at least two secondary strut ribs (8) for bracing against one primary strut rib (6).

5. Foundation according to any one of claims 1 to 4, **characterized in that** the base ring (2) and the mounting ring (3) have a different circumferential pitch.

6. Foundation according to any one of claims 1 to 5, **characterized in that** connecting elements, such as screw connections (12), are provided for the preferably releasable connection of the base ring (2) and the primary strut ribs (6) with the mounting ring (3) and the secondary strut ribs (8).

7. Foundation according to any one of claims 1 to 6, **characterized in that** the mounting ring (3) comprises a horizontal platform for a windmill tower and anchoring means for anchoring the windmill tower on the mounting ring, the anchoring means preferably comprising anchor bolts and/or cable lead throughs for tension cables.

8. Foundation according to claim 6 or 7, **characterized in that** the connecting elements for the connection of the base ring (2) and the primary strut ribs (6) with the mounting ring (3) and the secondary strut ribs (8) are arranged radially outside of the anchoring means for anchoring the windmill tower on the mounting ring (3).

9. Foundation according to any one of claims 1 to 8, **characterized in that** the prefabricated concrete elements consist of reinforced concrete which has a reinforcement structure, in particular reinforcement elements, profiles, rods or wires, which are embedded in the prefabricated concrete elements and/or which are designed as tensioning elements for bracing the prefabricated concrete elements together to form stressed concrete elements.

10. Foundation according to any one of claims 1 to 9, **characterized in that** a connection structure is provided which holds the prefabricated concrete elements together and is preferably coupled to the reinforcement structure.

11. Foundation according to claim 10, **characterized in that** the connection structure has several rigid elongated connecting elements, in particular steel profiles or rods, which each connect the prefabricated concrete elements of a pair of oppositely arranged prefabricated concrete elements with one another in such a way that a cavity is crossed that is encircled by the base ring and the mounting ring.

12. Foundation according to claim 11, **characterized in that** each pair of oppositely arranged prefabricated concrete elements is connected to one of the rigid elongate connecting elements.

13. Foundation according to claim 11 or 12, **characterized in that** a pair of oppositely arranged prefabricated concrete elements each comprise a ring section (4) of the base ring (2) with at least one support element (5) extending radially outward from the ring section (4) of the base ring (2) and with a primary strut rib (6) as well as a ring section (7) of the mounting ring (3) with at least one secondary strut rib (8).

14. Foundation according to claim 11, 12 or 13, **characterized in that** the rigid elongate connecting elements of the connection structure and the reinforcement structure, in particular the reinforcing rods, are interconnected by a jacket which is attached to an inner surface of the base ring (2) and the mounting ring (3).

15. Foundation according to any one of claims 11 to 14, **characterized in that** the reinforcement elements of the reinforcement structure are attached to the jacket by welding and/or screw connections.

16. Windmill with a windmill tower comprising a rotor, the windmill tower being mounted on a foundation according to any one of claims 1 to 15.

17. Modular system for producing a foundation for a windmill according to any one of claims 1 to 16, comprising
- a base ring (2) which is divided into several ring sections (4) and composed of prefabricated concrete elements,
- support elements (5) extending radially outward from the base ring (2),
- wherein the base ring (2) is supported on the support elements (5) by primary strut ribs (6), and
- a mounting ring (3), which is divided into several ring sections (7) and composed of prefabricated concrete elements, which is placed on the base ring (2) and connected to the base ring (2),
- wherein the mounting ring (3) is supported on the primary strut ribs (6) of the base ring (2) by means of secondary strut ribs (8),
- wherein a ring section (7) of the mounting ring (3) with at least one secondary strut rib (8) is formed in one piece as a prefabricated concrete element,
**characterized in that** the system comprises at least two different versions of the mounting ring (3), that can be placed selectively on the base ring (2).

18. Modular system according to claim 17, **characterized in that** the at least two different versions of the mounting ring (3) differ from one another in their height.

19. Modular system according to claim 17 or 18, **characterized in that** the at least two different versions of the mounting ring (3) differ in the anchoring means for anchoring the windmill tower on the mounting ring, in particular in the type, number or geometry of the anchoring means.

20. Modular system according to any one of claims 17, 18 or 19, **characterized in that** a first embodiment of the mounting ring comprises anchoring bolts for anchoring the windmill tower and a second embodiment of the mounting ring includes rope lead throughs for tensioning ropes for tensioning the windmill tower.

## Revendications

1. Fondation (1) pour une centrale éolienne avec un anneau de base (2) divisé en plusieurs sections d'anneau (4) et composé d'éléments préfabriqués en béton et d'éléments de support (5) s'étendant radialement vers l'extérieur à partir de l'anneau de base (2), l'anneau de base (2) prenant appui sur les éléments de support (5) par l'intermédiaire de nervures de contreventement (6) primaires et un anneau de construction (3) divisé en plusieurs sections d'anneau (7) et composé d'éléments préfabriqués en béton est posé sur l'anneau de base (2) et relié à l'anneau de base (2), **caractérisée en ce que** l'anneau de construction (3) prend appui sur les nervures de contreventement (6) primaires par l'intermédiaire de nervures de contreventement (8) secondaires, dans laquelle une section d'anneau (7) de l'anneau de construction (3) avec au moins une nervure de contreventement (8) secondaire est respectivement réalisé d'une seule pièce comme élément préfabriqué en béton.

2. Fondation selon la revendication 1, **caractérisée en ce qu'**une section d'anneau (4) de l'anneau de base (2) avec au moins un élément de support (5) s'étendant radialement vers l'extérieur à partir de la section d'anneau (4) de l'anneau de base (2) et avec une nervure de contreventement (6) primaire est respectivement réalisé d'une seule pièce comme élément préfabriqué en béton.

3. Fondation selon l'une des revendications 1 ou 2, **caractérisée en ce qu'**un élément préfabriqué en béton de l'anneau de base (2) comporte au moins deux éléments de support (5) s'étendant radialement vers l'extérieur à partir de la section d'anneau (4) de l'anneau de base (2), dont chacun comprend une nervure de contreventement (6) primaire.

4. Fondation selon l'une des revendications 1, 2 ou 3, **caractérisée en ce qu'**un élément préfabriqué en béton de l'anneau de construction (3) comporte au moins deux nervures de contreventement (8) secondaires pour s'appuyer contre une nervure de contreventement (6) primaire respective.

5. Fondation selon l'une des revendications 1 à 4, **caractérisée en ce que** l'anneau de base (2) et l'anneau de construction (3) présentent des division circonférentielles différentes l'une de l'autre.

6. Fondation selon l'une des revendications 1 à 5, **caractérisée en ce qu'**il est prévu des éléments de liaison, tels que des connexions vissées (12), pour la connexion de préférence amovible de l'anneau de base (2) et des nervures de contreventement (6) primaires avec l'anneau de construction (3) et les nervures de contreventement (8) secondaires.

7. Fondation selon l'une des revendications 1 à 6, **caractérisée en ce que** l'anneau de construction (3) comporte une surface de base horizontale pour une tour de centrale éolienne ainsi que des moyens d'ancrage pour ancrer la tour de centrale éolienne à l'anneau de construction, les moyens d'ancrage comprenant de préférence des boulons d'ancrage et/ou des passe-câbles pour le contreventement des câbles.

8. Fondation selon l'une des revendications 6 ou 7, **caractérisée en ce que** les éléments de liaison pour la connexion de l'anneau de base (2) et des nervures de contreventement (6) primaires avec l'anneau de construction (3) et les nervures de contreventement (8) secondaires sont disposés radialement à l'extérieur des moyens d'ancrage pour ancrer la tour de centrale éolienne à l'anneau de construction (3).

9. Fondation selon l'une des revendications 1 à 8, **caractérisée en ce que** les éléments préfabriqués en béton sont constitués de béton armé ayant une structure de renforcement, notamment des éléments, des profilés, des tiges ou des fils de renforcement, qui sont noyés dans les éléments préfabriqués en béton et/ou qui sont conçus comme des éléments de tension pour serrer les éléments préfabriqués en béton ensemble pour former des éléments en béton précontraint.

10. Fondation selon l'une des revendications 1 à 9, **caractérisée en ce qu'**il est prévu une structure de liaison, qui maintient ensemble les éléments préfabriqués en béton et qui est de préférence couplée à la structure de renforcement.

11. Fondation selon la revendication 10, **caractérisée en ce que** la structure de liaison présente plusieurs éléments de liaison allongés rigides, notamment des profilés ou des tiges en acier, reliant respectivement les éléments préfabriqués en béton d'une paire d'éléments préfabriqués en béton disposés de manière opposée de telle sorte qu'une cavité qui est encerclée par l'anneau de base et par l'anneau de construction est traversée.

12. Fondation selon la revendication 11, **caractérisée en ce que** chaque paire d'éléments préfabriqués en béton disposés de manière opposée est reliée avec un des éléments de liaison allongés rigides.

13. Fondation selon l'une des revendications 11 ou 12, **caractérisée en ce qu'**une paire d'éléments préfabriqués en béton disposés de manière opposée comporte respectivement une section d'anneau (4) de l'anneau de base (2) avec au moins un élément de support (5) s'étendant radialement vers l'extérieur à partir de la section d'anneau (4) de l'anneau de base (2) et une nervure de contreventement (6) primaire, ainsi qu'une section d'anneau (7) de l'anneau de construction (3) avec au moins une nervure de contreventement (8) secondaire.

14. Fondation selon l'une des revendications 11, 12 ou 13, **caractérisée en ce que** les éléments de liaison allongés rigides de la structure de liaison, et la structure de renforcement, notamment les tiges de renforcement, sont reliés l'un à l'autre par une gaine disposée sur une surface interne de l'anneau de base (2) et de l'anneau de construction (3).

15. Fondation selon l'une des revendications 11 à 14, **caractérisée en ce que** les éléments d'ancrage de la structure de renforcement sont fixées à la gaine par soudure et/ou par connexions vissées.

16. Éolienne comprenant une tour d'éolienne comprenant un rotor, la tour d'éolienne étant montée sur une fondation selon l'une des revendications 1 à 15.

17. Système modulaire pour la réalisation d'une fondation pour une centrale éolienne selon l'une des revendications 1 à 16, comprenant
- un anneau de base (2) divisé en plusieurs sections d'anneau (4) et composé d'éléments préfabriqués en béton,
- des éléments de support (5) s'étendant radialement vers l'extérieur à partir de l'anneau de base (2),
- l'anneau de base (2) prenant appui sur les éléments de support (5) par l'intermédiaire de nervures de contreventement (6) primaires et
- un anneau de construction (3) divisé en plusieurs sections d'anneau (7) et composé d'éléments préfabriqués en béton, qui est posé sur l'anneau de base (2) et relié à l'anneau de base (2),
- l'anneau de construction (3) prenant appui sur les nervures de contreventement (6) primaires de l'anneau de base (2) par l'intermédiaire de nervures de contreventement (8) secondaires,
- une section d'anneau (7) de l'anneau de construction (3) avec au moins une nervure de contreventement (8) secondaire étant respectivement réalisé d'une seule pièce comme élément préfabriqué en béton,
**caractérisé en ce que** le système comporte au moins deux variantes différentes de l'anneau de construction (3), qui sont placées sélectivement sur l'anneau de base (2).

18. Système modulaire selon la revendication 17, **caractérisé en ce que** les au moins deux variantes différentes de l'anneau de construction (3) diffèrent l'une de l'autre par leur hauteur.

19. Système modulaire selon l'une des revendications 17 ou 18, **caractérisé en ce que** les au moins deux variantes différentes de l'anneau de construction (3) diffèrent l'une de l'autre par les moyens d'ancrage pour ancrer la tour de centrale éolienne à l'anneau de construction, notamment par le type, nombre ou géométrie des moyens d'ancrage.

20. Système modulaire selon l'une des revendications 17, 18 ou 19, **caractérisé en ce qu'**une première variante de l'anneau de construction comprend des boulons d'ancrage pour l'ancrage de la tour d'éolienne, et une deuxième variante de l'anneau de construction comprend des passe-câbles pour des câbles de contreventement pour renforcer la tour d'éolienne.
